Europäisches Patentamt

European Patent Office

Office européen des brevets

(11) Publication number: **0 265 200 B1**

(12) **EUROPEAN PATENT SPECIFICATION**

(45) Date of publication of patent specification: **05.08.92** (51) Int. Cl.⁵: **B29C 61/06**

(21) Application number: **87309197.9**

(22) Date of filing: **19.10.87**

(54) **Heat-recoverable article.**

(30) Priority: **20.10.86 GB 8625124**

(43) Date of publication of application:
**27.04.88 Bulletin 88/17**

(45) Publication of the grant of the patent:
**05.08.92 Bulletin 92/32**

(84) Designated Contracting States:
**AT BE CH DE ES FR GB GR IT LI NL SE**

(56) References cited:
**EP-A- 0 082 022**
**EP-A- 0 149 321**
**DE-A- 3 319 120**
**FR-A- 2 408 199**
**US-A- 4 016 356**

(73) Proprietor: **N.V. RAYCHEM S.A.**
**Diestsesteenweg 692**
**B-3200 Kessel-lo(BE)**

(72) Inventor: **Overbergh, Noel Marcel Michiel**
**Corbielaan 20**
**B-3060 bertem(BE)**
Inventor: **Vansant, Jan Lodewijk M.F.G.**
**Minneveld 2**
**B-3040 Leuven(BE)**

(74) Representative: **Benson, John Everett et al**
**Raychem Limited Intellectual Property Law**
**Department Faraday Road Dorcan**
**Swindon, Wiltshire SN3 5HH(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

This invention relates to a heat recoverable article according to the preamble of claim 1.

Heat recoverable articles, especially heat shrinkable articles, are now widely used in many areas where insulation sealing and encapsulation are required. Usually these articles recover, on heating, towards an original shape from which they have previously been deformed, but the term "heat recoverable", as used herein, also include an article which, on heating, adopts a new configuration, even if it has not been previously deformed.

In their most common form, such articles comprise a heat-shrinkable sleeve made from a polymeric material exhibiting the property of elastic of plastic memory as described, for example in U.S. Patents 2,027,962; 3,086,242 and 3,957,372. As is made clear, for example, U.S. Patent 2,027,962, the original dimensionally heat stable form may be a transient form in a continuous process in which, for example, an extruded tube is expanded, whilst hot, to a dimensionally heat-unstable form but, in other applications, a preformed dimensionally heat stable article is deformed to a dimensionally heat unstable form in a separate stage.

In other articles, as described, for example, in British Patent 1,440,524, an elastomeric member such as an outer tubular member is held in a strectched state by a second member, such as an inner tubular member, which, upon heating, weakens and thus allows the elastomeric member to recover.

Heat shrinkable sleeves find many applications, especially in the connection and termination of wires, cables and pipes. One particular area of application of heat-recoverable articles of the type described above is in the insulation and protection of junctions between supply lines, especially electric cables, for example telecommunication cables.

For many applications, for example in many telecommunications distribution cables an ability to retain pressure is also imprtant. This may be required simply as an indication of completeness of environmental sealing, or because the cables are pressurised during use. Where cables are pressurised in use, the pressurisation may be continual, or be applied temporarily, for example to test the article.

Various tests have been devised to measure the ability of an article to retain a pressure. The tests are known as "cycling tests", and typically involves cycling the article at a constant pressure between predetermined temperature limits. To pass the test the article must not leak after a predetermined number of cycles.

The ability of an article to retain pressure depends both on the porosity of the article, that its perviousness to air, and also on its ability to withstand hoop stresses generated by pressure within the sleeve.

GB 1604379, describes a heat recoverable polymeric sleeve suitable for enclosing an object, for example a telecommunications splice. The sleeve includes a liner of a continuous metal foil. The metal is said to be sufficiently thin that it does not buckle on recovery of the sleeve, nor adopt a shape exhibiting peaks and troughs under the conditions of recovery. Thicknesses of 10-25 microns are stated to be preferred.

GB 1482918 also describes a heat recoverable article comprising a shrinkable sleeve and a metal component. The metal component is provided for radio frequency interference shielding. It is said to be a longitudinally corrugated sheet of such a diameter that it can be inserted into the shrinkable component. Thus the metal component is separate from the shrinkable component.

EP-A-0149321, upon which the preamble of claim 1 is based, discloses a heat-shrinkable laminate tubular film comprising a gas barrier layer of a copolymer of vinylidene chloride, outer layers of polyolefin, at least one intermediate layer of polyamide or a thermoplastic polyester, and adhesive layers disposed between any of the above layers.

EP-A-0082022 discloses a dimensionally-recoverable polymeric article for enclosing at least part of an elongate object, and has a surface at least part of which has an electricallyconductive layer, preferably a metal layer, adhering thereto.

We have discovered that improved performance of a heat shrinkable polymeric sheet can be obtained by laminating to a surface of a sheet a strengthening layer which is itself a laminate and which corrugates longitudinally on recovery of the sheet, while remaining laminated to the sheet.

We have also found that a good performance of a heat shrinkable polymeric sheet can be obtained when a strengthening layer comprising two or more layers, one of which has a high tensile stress and the other of which has low (moisture vapour transmission) MVT properties, is laminated to the sleeve.

In particular we have found that the presence of a strengthening layer can improve (1) the ability of the article to retain pressure, (2) the moisture vapour barrier properties of the article (by appropriate choice of material for the strengthening layer) and (3) the creep performance of the article.

EP 0 265 200 B1

Thus, the invention provides a heat recoverable article comprising a heat recoverable polymeric sheet and a strengthening layer laminated to the sheet wherein the strengthening layer comprises at least two layers, one of which comprises a moisture vapour barrier, characterized in that another of the layers has a tensile strength of at least 10 MPa at 100°C and in that the strengthening layer corrugates on recovery of the sheet to accommodate the dimensional change of the sheet, while remaining laminated to the sheet.

A moisture vapour barrier is a layer whose MTV value is low, preferably less than 1g/m$^2$/day, more preferably less than 0.3 g/m$^2$/day, especially less than 0.1 g/m$^2$/day, most preferably substantially zero. A low MVT value would be readily understood by one skilled in the art of heat-shrinkable plastics, particularly with reference to the cable accessories industry.

The position of a strengthening layer improves the ability of the article to retain pressure, since as mentioned above the ability of an article to retain pressure depends inter alia on its ability to withstand hoop stresses, and the inclusion of the strengthening layer means that at least some of hoop stresses generated within the article are accommodated by the strengthening layer rather than by the sleeve material itself. This means that the sleeve per se has to accommodate less of the hoop stresses. Consequently, to achieve an article having a given ability to withstand hoop stresses, a weaker sleeve (that is one that is itself less able to withstand hoop stresses) can be used in an article according to the invention, compared to that which would be necessary in an article of the prior art which does not have a strengthening layer.

As mentioned above the ability of an article to retain pressure depends also on the porosity or perviousness to air of the article. Advantageously the strengthening layer comprises a material that is itself impervious to air, to improve the imperviousness of the article.

Preferred embodiments according to the invention comprise a recoverable polymeric sheet, a strengthening layer laminated to the surface of the sheet, and a strengthening layer facing away from the sheet. Where the article is tubular wraparound, the adhesive is preferably on the inside surface. The adhesive is preferably heat activatable, for example a hot melt adhesive, such as a polyamide or EVA. The heat activatable adhesive preferably has a viscosity in the range of 40 - 150 preferably 60 to 80 Pa.s at 160°C, and a flow temperature in the range of 80 - 120°C, preferably 95 - 100°C. A suitable polyamide adhesive, which is disclosed in UK patent publication 2075991, contains up to 10%, preferably up to 1% of an acrylic rubber and has excellent adhesive to untreated polyethylene, and good low temperature flexibility. The activation temperature of the adhesive is preferably chosen to correspond to the single reocvery temperature of the sleeve, so that the single step of heating achieves both recovery and bonding. The adhesive need not extend over the entire surface of the sheet.

Where a polymeric sheet alone is used to enclose an object there is a possibility of moisture ingress into the enclosure because polymeric materials are inherently slightly permeable to moisture. Because of this possibility, in articles of the prior art, for some applications, it is usual to include silica gel packages within the articles to absorb that moisture.

According to the present invention a strengthening layer having a low (preferably substantially zero) MVT value is used to improve the MVT properties of the article. Hence the need to include silca gel drying packages in articles may be avoided. Where MVT values are quoted in this Specification they are measured at room temperature.

The article according to the invention has surprisingly been found to have improved creep performance as compared to comparative examples without a strengthening layer. In general the amount of creep occuring for the article with the strenghtening layer is approximately half that of articles without a strengthening layer.

Preferred features of the strengthening layer, and associated layers which provide the advantages of the present invention will now be discussed.

Preferably the strengthening layer has a tensile strength greater than that of the polymeric sheet. Preferably the strengthening layer has a tensile strength of at least 10 MPa more preferably at least 13 MPa, especially at least 16 MPa at 100°C, and a tensile strength of at least 30 MPa at room temperature.

Preferably the strengthening layer has a flow temperature which is at least 20°C, more preferably at least 40°C higher than the recovery temperature of the fabric. Preferably the strengthening layer has a melt flow index of less than 10, more preferably less than 5, especially preferably less than 2, measured at 190°C under 2.16 Kg.

The preferred tensile strength values, flow temperatures and melt flow indices are preferred to provide the desired improved pressure retention capability, and creep resistance.

Preferably the strengthening layer comprises a material that has a low MVT value, especially for applications where it is important to have low moisture vapour transmission from the exterior to interior of the article. Preferably the strengthening layer comprises a material having an MVT value less than 1g/m$^2$/day, more preferably less than 0.3g/m$^2$/day, most preferably substantially zero.

3

While it is desirable that the strengthening layer is strong, it must also be able to accommodate the configurational change of the article on recovery of the sleeve. This is preferably achieved by making the strengthening layer so that it can corrugate longitudinally, and preferably also uniformly on shrinkage of the fabric to accommodate configuration change of the article.

One parameter which is considered important to determine the ability of the strengthening layer to accommodate changes in the configuration of the article by forming itself into corrugations in the stiffness of the strengthening layer. The term stiffness is applicable to both homogeneous and heterogeneous materials and where several layers are present is dependent on the inherent stiffness of the separate layers as well as their respective thickness. Stiffness measurements are considered particularly relevant for the strengthening layer of the present invention since it is envisaged that multilayer strengthening layers could be used.

Preferred stiffness values were determined for the strengthening layer of the present invention using British Standard test BS 2782 (Part 3 method 332A 1976). The stiffness of the strengthening layer measured according to this method is preferably less than 10 N/m, more preferably less than 6N/m measured at room temperature. At 100°C the stiffness of the strengthening layer is no more than 6 N/m, more preferably no more than 1.5 N/m.

The strengthening layer corrugates on recovery, preferably uniformly. Preferably the strengthening layer is not prescored or pretreated in any other way to enhance the corrugation. Preferably the strengthening layer is such that the recovery forces exerted on it by the recovering sheet cause it to form corrugations having a height in the range of 1.0 to 1.3 mm, preferably about 1.16 mm, and a tip to tip distance of about 1 to 2.5 mm, preferably about 1.7 mm.

According to the invention the strengthening layer is laminated to the sheet. This includes the strengthening layer being directly laminated to the sheet, and also the lamination being via an intermediate member.

The strengthening layer remains laminated to the sheet even after recovery, that is no disbonding which would cause an air gap between the sheet and the strengthening layer occurs. Disbonding is disadvantageous for a number of reasons. For example, the transfer of hoop stresses from the sheet to the strengthening layer is reduced, reducing the ability of the article to retain pressure, ingress of water may occur, for example at the edges, and, where the strengthening layer corrugates on recovery, the corrugations may be non-uniform.

In order that the strengthening layer remain laminated to the sheet before, during and after recovery, a layer of meltable material is preferably provided between the sheet and the strengthening layer which is molten at the recovery temperature of the sheet. This enables the strengthening layer to corrugate within the meltable material during recovery, and ensures that, after recovery, the meltable material has flowed to fill the troughs in the corrugated strengthening member. Thus there is no air gap between the sheet and the strengthening layer before, during or after recovery. Preferably the meltable material has a melt flow index in the range 0-10 more preferably in the range measured at 190°C under 2.16 Kg. The meltable material may be, for example a heat activatable adhesive, for example a copolymer.

Preferably the strengthening layer is provided on both its major surfaces with a meltable material, preferably as defined above. Thus the strengthening layer corrugates in a matrix of meltable material. The presence of the meltable material on one, or preferably both sides of the strengthening layer enhances the uniformity of the corrugation of the strengthening layer.

The meltable material between the sheet and the strengthening layer is preferably selected to form a good bond between those layers.

The meltable layer between the sleeve and the strengthening layer preferably has a thickness in the range 20-30 microns. The meltable layer on the surface of the strengthening layer facing away from the sheet preferably has a thickness in the range 20-30 microns.

The ability of the meltable material to flow to fill the space between the corrugated strengthening member and the sleeve, and preferably the provision of a meltable matrix in which the strengthening layer corrugates is thought to be important in improving the creep characteristics of the article. In this respect it is noted that it is surprising that a corrugated member can improve the creep resistance of the article. Each of the required properties of the strengthening layer may be provided by any one of the layers of by a combination of the layers. For example where a layer having high tensile strengtrh and low MVT value is required to layers together may be used, one having only the required high tensile strength and the other having only the required low MVT value, or each layer may have noth properties. The preferred tensile strength may be achieved, for example, using a layer of mylar or biaxially stretched nylon. The preferred low MVT value may be achieved for example using a metal layer, for example aluminium. Thus a preferred strengthening layer comprises a layer of mylar or nylon bonded, on one or both sides, to a layer of metal such as aluminium. The layer(s) of metal may be provided, for example, in the form of a foil or as a very thin metal deposited layer.

Where a support layer such as mylar or nylon, and a metal foil layer are used either layer may be nearest the sheet. Preferably the mylar or nylon is nearest the sheet to achieve the strongest bond between the sheet and the strengthening layer.

The overall thickness of the strengthening layer is preferably in the range 5 to 100 microns, more preferably in the range 7 to 35 microns. Where a metal layer or layers is used in combination with a support layer preferably has a thickness in the range about 8-25 microns, for example about 12 - 15 microns. Where the metal layer is provided as a foil it preferably has a thickness about 5-15 microns, for example about 9-12 microns. Where the metal is provided as a deposited layer or layers this preferably has a thickness of about 1-500 Angstroms.

Preferred materials that can be used alone or in combination for the strengthening layer include mylar (trade mark), biaxially stretched nylon, polyesters, for example polyethylene terephthalate, Elvax 670 (trade mark) as supplied by Dupont, DPD-6181 (trade mark) as supplied by Union Carbide, Plexar 100 (trade mark) as supplied by DSM, aluminium and other metals, foils and deposited layers.

The skilled man would be able to select suitable materials or combinations from these and other materials bearing in mind the desired tensile strengths, MVT values, etc which are preferred.

The article according to the invention may be made in tubular form or wraparound form. Wraparound articles are preferred since they can be installed around substrates having no free ends. This is particularly useful when a splice in a telephone cable is to be enclosed after the repair of only a few of the may conductors it contains, since if the article is tubular, the entire cable has to be severed for installation. Wraparound products are also useful where space is limited.

Where a wraparound sleeve is used an elongate flap may be provided beneath the longitudinal slit of the sleeve to from the seal.

The techniques by which the sleeve may be held in the wrapped configuration in any suitable way. Firstly, a lap or other bond may be made between opposing edges of the sheet, optionally with a patch to prevent peel-back. Another method of closure involves forming the edges of the sleeve in such a way that they may be held together by some form of clamping means, such as the C-shaped channel disclosed in UK Patent No. 1155470, or by a reuseable tool.

Where this type of closure is used the strengthening layer advantageously extends to the longitudinal edges of the article and the channel grips the strengthening layer with the sheet. This substantially prevents the strengthening layer pulling out from the longitudinal edges of the article at the closure.

Embodiments of the invention will now be described, by way of example, the reference to the accompanying drawings, wherein:

Figure 1 is a perspective view of an article according to the invention.

Figure 2 is cross-section through A-A Figure 1,

Figure 3 is a cross-section through the article of Figure 1 and 2, after recovery

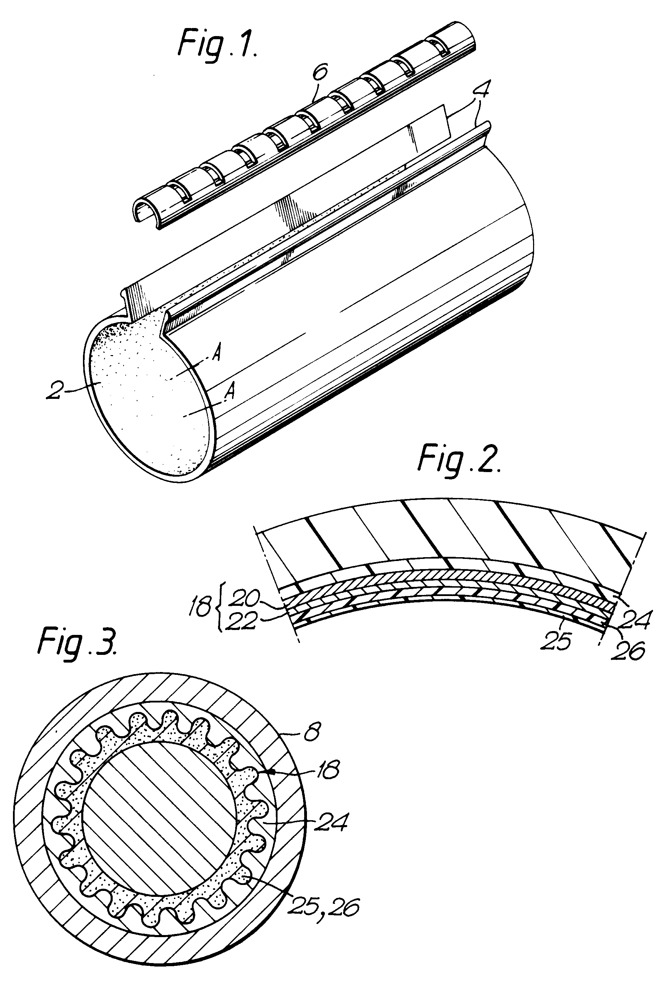

Figure 1 shows a wraparound article 2, according to the invention. Longitudinal edges 4 of the article are thickened and can be held together by a channel shaped closure 6. The article 2 comprises a laminate structure. This is shown in Figure 2 which is a cross-section through A-A of the article of Figure 1. The structure comprises a recoverable polymeric sheet 8, which comprises low density polyethylene. The sheet recovers at a temperature of 130°C.

Strengthening layer 18 is bonded to the sheet. It itself comprises two layers, which are respectively a layer of aluminium (20) and a support layer of biaxially stretched nylon (22). To either side of these layers are bonded copolymer hot melt adhesive layers 24 and 26. Adhesive layers 24 bonds the strengthening layer 18 to the sheet 8 both before and after recovery. Adhesive layer 26 bonds the article to the underlying object after recovery. Adhesive layers 24 and 26 have a flow temperature of 200 °C. They also have a melt flow index of about 5 at 190°C measured at 2.16 Kg. Thus at the recovery temperature of the sheet, the strengthening layer buckles layers 24 and 26, the adhesive layer 24 flowing to fill any gaps between the strengthening layer 18 and the sheet 8. A final layer of a polyamide adhesive 25 is provided on the surface of layer 26. This is to bond the article 2 to the underlying object.

Figure 3 shows the article after recovery onto an object such as a cable 27. The recoverable sheet 8 has shrunk, and under its action the strengthening layer 18 has corrugated to accommodate the reduction in size of the article. Adhesive layer 24 has flowed to fill the troughs in the corrugated layer 18 so that the strengthening layer 18 remains laminated to sheet 8. Adhesive layers 26 and 25 have flowd to fill the gap between the strengthening layer 18 and cable 27.

Examples

Creep Testing

A comparative test was carried out to determine the tendency of polymeric recoverable sleeves with and without a strenghening layer to creep. Various strengthening layers were used. The recoverable polymeric sheet used was in each case a cross-linked polyethylene sleeve.

In each case the strengthening layer was laminated against the recoverable polymeric sleeve by a layer, 0.1 mm thick of S1112 adhesive (supplied by Raychem). A layer, 0.5 mm thick of S1188 adhesive (supplied by Raychem) was also present on the surface of the strengthening layer facing away from the polymeric sleeve to bond the recoverable article to the underlying object, which was a 40 mm diameter cable.

Each sleeve (with or without strengthening layer) was recovered onto the cable, then subjected to creep testing in a 60°C water bath at 70 KPa air pressure.

The results are set out in table 1 below. They show that in each case where a strengthening layer is used creep is significantly reduced.

## Table 1

| Example No. | Material of Strengthening Layer | Average creep after 6 days (%) |
|---|---|---|
| 1 | None | 21.5 |
| 2 | 2 microns polyester | 9.5 |
| 3 | 15 microns nylon/ 12 microns aluminium | 8.0 |
| 4 | 23 micron polyester/ 16 microns aluminium | 6.6 |

**Claims**

1. A heat recoverable article (2) comprising a heat recoverable polymeric sheet (8) and a strengthening layer (18) laminated to the sheet wherein the strengthening layer comprises at least two layers, one of which comprises a moisture vapour barrier (20), characterized in that another of the layers (22) has a tensile strength of at least 10 MPa at 100°C and in that the strengthening layer (18) corrugates on recovery of the sheet (8) to accommodate the dimensional change of the sheet (8), while remaining laminated to the sheet (8).

2. An article according to claim 1, wherein the innermost surface of the article, which is hollow, is coated with a heat activatable adhesive.

3. An article according to claim 1, wherein the sheet is laminated directly to the strengthening member.

4. An article according to claim 1 or 2, which is a tubular or wraparound article.

5. An article according to any preceding claim, wherein the recoverable sheet is radially shrinkable, and the strengthening layer corrugates longitudinally, preferably uniformly, on shrinkage of the sheet to accommodate the configurational change of the article.

6. An article according to any preceding claim, wherein the strengthening layer has a tensile strength of at least 10 MPa at 100°C and/or at least 30 MPa at room temperature.

**7.** An article according to any preceding claim, wherein the strengthening layer has a stiffness measured according to BS 2782 of less than 10 N/m at room temperature, and/or less than 6 N/m at 10°C.

**8.** An article according to any preceding claim, wherein the strengthening layer has a flow temperature of at least 20°C higher than the recovery temperature of the sheet.

**9.** An article according to any prededing claim, wherein the strengthening layer comprises a material having a moisture vapour transmission value (MVT) les than $1g/m^2/day$.

**10.** An article according to any preceding claim, wherein the strengthening layer comprises a laminate of a material having a tensile strength greater than 10 N/M at room temperature, preferably nylon or mylar, and a material having an MVT value less than $1g/m^2/day$, preferably a metal foil.

**11.** An article according to any preceding claim, wherein the thickness of the material having the tensile strength greater than 10 N/m is in the range of 10-20 microns.

**12.** An article according to claim 10 or 12, wherein the layer having the MVT value less than $1g/m^2/day$ is a metal foil layer having a thickness in the range 10-15 microns, or is a metal deposited layer having a thickness 300 - 500 Angstroms.

**13.** An article according to claim 3, wherein a meltable material is provided between the strengthening layer and the sheet which flows on recovery to fill the troughs between the strengthening layer and the sheet on corrugation of the strengthening layer.

**14.** An article according to any preceding claim, in which the layer having a tensile strength of at least 10 MPa at 100°C comprises nylon or mylar.

**15.** An article according to any preceding claim, wherein the strengthening layer remains laminated to the sheet before, during and after recovery.

**Revendications**

**1.** Article (2) doué de reprise de forme à chaud comportant une feuille polymérique (8) douée de reprise de forme à chaud et une couche de renfort (18) appliquée par stratification sur la feuille, dans lequel la couche de renfort comprend au moins deux couches dont l'une comprend un écran (20) à la vapeur humide, caractérisé en ce qu'une autre des couches (22) possède une résistance à la traction d'au moins 10 MPa à 100°C, et en ce que la couche de renfort (18) ondule lors d'une reprise de forme de la feuille (8) pour s'adapter à la variation de dimension de la feuille (8), tout en restant stratifiée à la feuille 8.

**2.** Article selon la revendication 1, dans lequel la surface intérieure de l'article, qui est creux, est revêtue d'un adhésif pouvant être activé par la chaleur.

**3.** Article selon la revendication 1, dans lequel la feuille est appliquée par stratification directement sur l'élément de renfort.

**4.** Article selon la revendication 1 ou 2, qui est un article tubulaire ou enroulé.

**5.** Article selon l'une quelconque des revendications précédentes, dans lequel la feuille douée de reprise de forme peut être rétractée radialement, et la couche de renfort ondule longitudinalement, de préférence de façon uniforme, lors du retrait de la feuille pour s'adapter au changement de configuration de l'article.

**6.** Article selon l'une quelconque des revendications précédentes, dans lequel la couche de renfort a une résistance à la traction d'au moins 10 MPa à 100°C et/ou d'au moins 30 MPa à la température ambiante.

**7.** Article selon l'une quelconque des revendications précédentes, dans lequel la couche de renfort a une raideur, mesurée conformément à la norme BS 2782, de moins de 10 N/m à la température ambiante et/ou de moins de 6 N/m à 10°C.

8. Article selon l'une quelconque des revendications précédentes, dans lequel la couche de renfort a une température de fluidité supérieure d'au moins 20°C à la température de reprise de forme de la feuille.

9. Article selon l'une quelconque des revendications précédentes, dans lequel la couche de renfort comprend une matière ayant une valeur de transmission de vapeur humide (MVT) inférieure à 1 g/m²/jour.

10. Article selon l'une quelconque des revendications précédentes, dans lequel la couche de renfort comprend un stratifié d'une matière ayant une résistance à la traction supérieure à 10 N/m à la température ambiante, de préférence du Nylon ou du Mylar, et d'une matière ayant une valeur MVT inférieure à 1 g/m²/jour, de préférence une mince feuille de métal.

11. Article selon l'une quelconque des revendications précédentes, dans lequel l'épaisseur de la matière ayant la résistance à la traction supérieure à 10 N/m est dans la gamme de 10 à 20 micromètres.

12. Article selon la revendication 10 ou 11, dans lequel la couche ayant la valeur MVT inférieure à 1 g/m²/jour est une couche formée d'une mince feuille de métal ayant une épaisseur dans la gamme de 10 à 15 micromètres, ou est une couche métallique déposée ayant une épaisseur de 300 à 500 Å.

13. Article selon la revendication 3, dans lequel une matière fusible est prévue entre la couche de renfort et la feuille, laquelle coule lors d'une reprise de forme pour remplir les creux entre la couche de renfort et la feuille lors de l'ondulation de la couche de renfort.

14. Article selon l'une quelconque des revendications précédentes, dans lequel la couche ayant une résistance à la traction d'au moins 10 MPa à 100°C comprend du Nylon ou du Mylar.

15. Article selon l'une quelconque des revendications précédentes, dans lequel la couche de renfort reste stratifiée à la feuille avant, pendant et après la reprise de forme.

**Patentansprüche**

1. Wärmerückstellbarer Gegenstand (2), der einen wärmerückstellbaren polymeren Flächenkörper (8) und eine darauf laminierte Verstärkungsschicht (18) aufweist, wobei die Verstärkungsschicht wenigstens zwei Schichten umfaßt, von denen eine eine Wasserdampfsperre (20) aufweist, dadurch gekennzeichnet, daß eine andere (22) der Schichten eine Zugfestigkeit von wenigstens 10 MPa bei 100 °C hat und daß die Verstärkungsschicht (18) sich bei Rückstellung des Flächenkörpers (8) in Anpassung an die dimensionsmäßige Änderung des Flächenkörpers (8) wellt, während sie gleichzeitig auf dem Flächenkörper (8) laminiert bleibt.

2. Gegenstand nach Anspruch 1, wobei die innerste Oberfläche des Gegenstands, der hohl ist, mit einem wärmeaktivierbaren Kleber beschichtet ist.

3. Gegenstand nach Anspruch 1, wobei der Flächenkörper direkt auf die Verstärkungsschicht laminiert ist.

4. Gegenstand nach Anspruch 1 oder 2, der ein rohrförmiger Gegenstand oder ein Wickelgegenstand ist.

5. Gegenstand nach einem der vorhergehenden Ansprüche, wobei der rückstellbare Flächenkörper in Radialrichtung schrumpfbar ist und die Verstärkungsschicht sich beim Schrumpfen des Flächenkörpers in Längsrichtung bevorzugt gleichmäßig wellt, um sich an die Konfigurationsänderung des Gegenstands anzupassen.

6. Gegenstand nach einem der vorhergehenden Ansprüche, wobei die Verstärkungsschicht eine Zugfestigkeit von wenigstens 10 MPa bei 100 °C und/oder wenigstens 30 MPa bei Raumtemperatur hat.

7. Gegenstand nach einem der vorhergehenden Ansprüche, wobei die Verstärkungsschicht eine nach BS 2782 gemessene Steifheit von weniger als 10 N/m bei Raumtemperatur und/oder weniger als 6 N/m bei 100 °C hat.

8. Gegenstand nach einem der vorhergehenden Ansprüche, wobei die Verstärkungsschicht eine Fließtemperatur hat, die wenigstens 20 °C höher als die Rückstelltemperatur des Flächenkörpers ist.

9. Gegenstand nach einem der vorhergehenden Ansprüche, wobei die Verstärkungsschicht ein Material aufweist, das einen Wasserdampfdurchlässigkeitswert von weniger als 1 g/m$^2$/d hat.

10. Gegenstand nach einem der vorhergehenden Ansprüche, wobei die Verstärkungsschicht ein Laminat aus einem Material, dessen Zugfestigkeit größer als 10 N/m bei Raumtemperatur ist, bevorzugt Nylon oder Mylar, und einem Material mit einem Wasserdampfdurchlässigkeitswert von weniger als 1 g/m$^2$/d, bevorzugt einer Metallfolie, aufweist.

11. Gegenstand nach einem der vorhergehenden Ansprüche, wobei die Dicke des Materials, dessen Zugfestigkeit höher als 10 N/m ist, im Bereich von 10-20 $\mu$m liegt.

12. Gegenstand nach Anspruch 10 oder 12, wobei die Schicht mit dem Wasserdampfdurchlässigkeitswert von weniger als 1 g/m$^2$/d eine Metallfolienschicht mit einer Dicke im Bereich von 10-15 $\mu$m oder eine Metallisierungsschicht mit einer Dicke von 300-500 Å ist.

13. Gegenstand nach Anspruch 3, wobei zwischen der Verstärkungsschicht und dem Flächenkörper ein schmelzfähiges Material vorgesehen ist, das bei der Rückstellung fließt, um bei der Wellenbildung der Verstärkungsschicht die Vertiefungen zwischen der Verstärkungsschicht und dem Flächenkörper auszufüllen.

14. Gegenstand nach einem der vorhergehenden Ansprüche, wobei die Schicht mit einer Zugfestigkeit von wenigstens 10 MPa bei 100 °C Nylon oder Mylar aufweist.

15. Gegenstand nach einem der vorhergehenden Ansprüche, wobei die Verstärkungsschicht vor, während und nach der Rückstellung auf dem Flächenkörper laminiert bleibt.

Fig.1.

6

4

A

A

2

Fig.2.

18 { 20
22

24

25

26

Fig.3.

8

18

24

25,26